# EUROPEAN PATENT SPECIFICATION

(11) **EP 4 105 441 B1**
(45) Date of publication and mention of the grant of the patent: **11.12.2024**
(21) Application number: 21382538.3
(22) Date of filing: 18.06.2021
(51) Int. Cl.: F01D 5/18, F01D 9/06

(54) **AIRFOIL FOR A TURBINE ENGINE**
SCHAUFEL FÜR EINEN TURBINENMOTOR
PROFIL AÉRODYNAMIQUE POUR UN MOTEUR À TURBINE

(43) Date of publication of application: 21.12.2022
(73) Proprietor: ITP Next Generation Turbines S.L., 48170 Zamudio (ES)
(72) Inventor: ÁLVAREZ GARCÍA, José Javier, E-48170 Zamudio, Vizcaya (ES)
(74) Representative: ABG Intellectual Property Law, S.L.

(56) References cited:
- US-A1- 2013 302 176
- US-A1- 2018 195 396
- US-A1- 2020 182 152

## Description

### FIELD OF THE INVENTION

The present invention belongs to the technical field of turbines airfoils, and more particularly to the cooling at the trailing edge of turbines airfoils.

In particular, the present invention proposes an airfoil dealing with the use of a specific cooling configuration at the trailing edge of the airfoil for low and large cooling flow applications.

### PRIOR ART

One of the most critical problem turbomachine faces is how to prevent overheating of turbine components by cooling the turbine section using cooling fluid drawn from the compressor section.

Typically, the cooling fluid is flowed through and around various structure within the turbine section. A portion of the cooling fluid is flowed through the turbine airfoils, which have internal passageways for the passage of cooling fluid.

An airfoil of a turbine usually comprises a trailing edge, a leading edge and a suction side wall and a pressure side wall both extending axially between the leading edge and the trailing edge. The trailing edge of a cooled vane or blade is usually provided with a cut-back consisting in the suction side wall extending further downstream of the pressure side wall.

As the cooling flow passes through the passageways from the airfoil, heat is transferred from the turbine airfoil surfaces to the cooling fluid. The passageways include a variety of mechanisms, such as trip strips and pedestals, to maximize heat transfer between the cooling fluid and the turbine airfoil. The cooling fluid exits into the flow path through cooling holes distributed about the airfoil section of the turbine airfoil.

The trailing edge of cooled airfoils is typically cooled by either cast slots or film holes on the airfoil pressure side. Cast slots present a better performance than film holes since they are able to provide higher and more uniform cooling effectiveness profiles across the airfoil span and eject the cooling further downstream closer to the airfoil trailing edge.

However, the use of cast slots is restricted to relatively large cooling flow applications since their associated large flow areas, which are dictated by the achievable manufacturing minimum slot height values, do not guarantee enough backflow pressure margin for low applications.

Sometimes, for cooling airfoils, a row of film holes for low cooling flow applications in low pressure and intermediate pressure vanes is used. A row of film holes offers several disadvantages over a cast slot. On one hand, the average film effectiveness is lower and the distribution of such effectiveness across the airfoil span is less uniform. On the other hand, the film holes are not cast but machined on the airfoil pressure side wall which restricts both the minimum inclination angle achievable (the lower the angle the higher the cooling effectiveness) and the position of cooling ejection which cannot be as close to the airfoil trailing edge as cast slots can thus reducing the capability of heat removal from the trailing edge.

Therefore, the present invention provides an improved cooled airfoil that provides a controlled flow diffusion for low flow cooling applications and at the same time provides that this flow reaches as far through the airfoil as possible towards the trailing edge.

Document US2020/182152A1 describes a cooling circuit for gas turbine engine component.

Document US2013/302176A1 describes a turbine airfoil trailing edge cooling slot.

Document US2018/195396A1 describes a blade, cut-back of blade or vane and gas turbine having the same.

### SUMMARY OF THE INVENTION

The present invention solves the aforementioned problems by means of an airfoil according to claim 1. In dependent claims, preferred embodiments of the invention are defined.

The invention provides *an airfoil* according to the appended claim 1.

The leading edge from an airfoil is the front part of the airfoil, which is the portion that meets the external hot flow first when it is flowing outside the airfoil in operating mode, whereas the trailing edge is the back part of the airfoil that is located axially downstream from the leading edge according to a flow direction F. Through the entire description, the "flow direction F" will be understood as the flow direction that corresponds to the direction of the external hot flow surrounding the airfoil when it is in operating mode, that is, a direction from the leading edge to the trailing edge of the airfoil.

The airfoil comprises a suction side wall and a pressure side wall that meet at the leading edge and trailing edge of the airfoil. Between the suction side wall and the pressure side wall a central interior cavity for the airfoil is defined for the passage of cooling flow inside the airfoil. This cavity is an open cavity that allows the passage of cooling flow inside the airfoil and the ejection of the cooling flow over the trailing edge in order to cool the airfoil at the trailing edge.

The airfoil further comprises a row of a plurality of triangular pedestals located at the trailing edge of the airfoil and wherein these pedestals are arranged at least partially in the central cavity between the pressure side wall and the suction side wall of the airfoil. Through the entire description, "pedestals" will be understood as protrusions arranged between the pressure side wall and suction side wall of the airfoil that maximize heat transfer between the cooling flow and the airfoil.

According to the claimed invention, one side of a triangular pedestal, which through the description will be called "wide side", is oriented or faced to the leading edge of the airfoil, and the opposite vertex of the triangular pedestal (that is opposite to the wide side) is oriented or faced to the trailing edge. That is, the wide side is located upstream of the opposite vertex of the triangular pedestal according to the flow direction F.

A diffusing duct is defined between each pair of adjacent triangular pedestals. The diffusing ducts allows the passage of the cooling flow from the central cavity of the airfoil to the outside of the airfoil at the trailing edge where the cooling flow is mixed with the hot flow.

The central cavity comprises a height that decreases in the flow direction F, that is, the pressure side wall and the suction side wall of the airfoil, which determine the central cavity inside the airfoil, converge in the flow direction F decreasing the space between both side walls. These diffusing ducts are three-dimensional diffusing ducts formed by a row of triangular pedestals which form ducts converging in an axial direction (corresponding to the flow direction F) and diverging in a lateral direction (orthogonal to the flow direction F) with an overall diverging area ratio sufficiently small to prevent or minimise flow detachment.

Each diffusing duct comprises an inlet and an outlet, through which the cooling flow flowing within the cavity enters and exits the diffusing duct respectively. Along the entire document, "restrictor" will be understood as the inlet, with a minimum fluid passage area, of a diffusing duct that allows the penetration of the cooling flow flowing within the central cavity of the airfoil into the diffusing duct.

The "slot" is the outlet of a diffusing duct that allows the exit of the cooling flow flowing through diffusing ducts to the trailing edge of the airfoil. Each slot from a diffusing duct merges with the rest of slots from the others diffusing ducts of the airfoil. Therefore, a common slot for all the diffusing ducts is defined in the airfoil. This common slot is called "diffuser exit area" and it is the area where the cooling flow exits the diffusing ducts to the outside of the airfoil over the trailing edge.

The cooling flow exiting a diffusing duct by its diffuser exit area or slot, diffuses laterally until the cooling flow ends up merging with the cooling flow exiting the other diffusing ducts thus providing coalescence between the cooling flow. The decrease in height of the central cavity in the flow direction F allows for a greater lateral spread, achieving the merging of ducts in a shorter length. In this way and by means of the coalescence between cooling flows, a uniform cooling flow is achieved along the trailing edge of the airfoil.

The common slot is fed by the diffusing ducts with cooling flow coming from the central cavity towards outside the airfoil in the flow direction F, and allows the use of the airfoil in low cooling flow applications. Thus, the present invention provides advantageously a small cooling exit area which may guarantee backflow margin control in low cooling flow applications.

Therefore, the present solution provides a greater effectiveness since the flow injection angle is lower compared to prior art solutions as a result of the cooling flow does not penetrate the hot flow but the cooling flow is mixed with the hot flow in a light way. That is, the cooling flow comes out through the restrictors and is diffused in the form of a jet being mixed with the hot flow so that by diffusion the flows are unified over the trailing edge. Thus, the common slot provides a tangential flow injection (substantially parallel to the pressure side of the airfoil) and maximizes effectiveness, and the flow application is closer to the trailing edge, and therefore, the temperatures achieved are lower compared to the prior art solution.

Advantageously, this airfoil can be used in low pressure or intermediate pressure vanes and also in low pressure or intermediate pressure cooled rotating blades.

In a particular embodiment, *the airfoil further comprises a cut-back on the pressure side wall at the trailing edge, wherein the cut-back defines an airfoil exit area determined by the distance between the suction side wall and the pressure side wall at the end of the pressure side wall.*

The airfoil comprises a cut-back located along the end of the pressure side wall at the trailing edge. The cut-back presents a configuration where the suction side wall extends further downstream of the pressure side wall according to the flow direction F. The cut-back is configured to provide cooling flow over the suction side wall at the trailing edge.

The space between the suction side wall and the pressure side wall at the cut-back defines an exit area at the cut-back that is the slot provided at the cut-back between the pressure side wall and the suction side wall.

The cooling flow delivered to the exit area at the cut-back is directed through the diffusing ducts to this exit area in order to provide convective cooling at the trailing edge of the airfoil.

In a particular embodiment, *the pedestals are located within the cavity and completely covered by both, suction side wall and pressure side wall, and also arranged upstream from the cut-back according to the flow direction F at the trailing edge, and wherein the diffuser exit area is determined by the distance between the suction side wall and the pressure side wall at the slot and this diffuser exit area of the slot is greater than the airfoil exit area of the cut-back.*

According to this embodiment, the row of triangular pedestals from the airfoil is fully arranged within the central cavity of the airfoil at the trailing edge. More concretively, the triangular pedestals are arranged between the suction side wall and the pressure side wall completely covered by both.

The cut-back of the trailing edge at the pressure side wall represents the end of the pressure side wall, therefore, the pedestals that are completely covered by the pressure side wall and the suction side wall are located previous to the cut-back according to the flow direction F.

In this embodiment, the diffuser exit area is the slot determined by the distance between the suction side wall and the pressure side wall where the cooling flow exits the diffusing ducts. The diffuser exit area of the common slot for the diffusing ducts, through which the cooling flow exits the diffusing ducts, is located upstream from the airfoil exit area of the cut-back according to the flow direction F. Due to the fact the pressure side wall and the suction side wall converges according to the flow direction F, reducing the space between them, the diffuser exit area is greater than the exit area of the cut-back in this embodiment.

In another particular embodiment, *the pedestals are located within the cavity and completely covered by both, suction side wall and pressure side wall, and arranged in such way that the diffuser exit area of the slot is determined by the distance between the suction side wall and the pressure side wall at the slot and corresponds to the airfoil exit area of the cut-back.*

According to this embodiment, the row of triangular pedestals from the airfoil is arranged within the central cavity of the airfoil at the trailing edge. More concretively, the triangular pedestals are arranged between the suction side wall and the pressure side wall completely covered by both of them. But in this embodiment, the pedestals end at the cut-back of the airfoil, i.e., the diffuser exit area which constitutes the end of the pedestals corresponds to the airfoil exit area at the cut-back.

In this embodiment, the diffuser exit area is the slot determined by the distance between the suction side wall and the pressure side wall at the end of the pressure side wall that is where the cut-back is arranged, where the cooling flow exits the diffusing ducts and where the cooling flow is ejected to the outside of the airfoil over the trailing edge. Therefore, the diffuser exit area is equal to the airfoil exit area of the cut-back in this embodiment.

In another embodiment, *the pedestals are partially uncovered by the pressure side wall and the cut-back is arranged between the restrictors of the diffusing ducts and the slot, wherein the airfoil exit area of the cut-back is provided between the restrictors and the diffuser exit area of the slot.*

According to this embodiment, the triangular pedestals are partially uncovered by the pressure side wall, i.e., the cut-back of the pressure side wall is arranged before the common slot for the diffusing ducts, between the restrictors and the slots of the diffusing ducts.

In this embodiment, the cooling flow enters into the diffusing ducts through the restrictors and once the cooling flow passes through the cut-back at the end of the pressure side wall, the cooling flow flowing within the diffusing ducts interacts, before exiting the diffusing ducts at the common slot, with the external hot flow since the last part of the diffusing ducts is uncovered by the pressure side wall. In a particular embodiment, *the pedestals comprise a height decreasing in the flow direction F.*

The pedestals are arranged between the suction side wall and the pressure side wall of the airfoil. The pressure side wall and the suction side wall converges according to the flow direction F, reducing the space between them. As the pedestals are arranged between these walls, their height, which is the distance between these walls, also decreases according to the flow direction F.

The distance between the suction side wall and the pressure side wall is greater in the wide side of the triangular pedestals than in the opposite vertex of the triangular pedestals since the wide side is located upstream of the opposite vertex according to the flow direction F.

According to the claimed invention, *the pedestals comprise at least two lateral walls so that at least one diffusing duct is provided between two lateral walls from two consecutive pedestals.*

The triangular pedestals comprise two lateral walls, which correspond to the sides of the triangular pedestals joining in the vertex opposing the wide side of the triangular pedestals. The lateral walls of the pedestals may be delimited by the pressure side wall and the suction side wall.

Each diffusing duct is defined between each pair of adjacent triangular pedestals and, according to this embodiment, the corresponding diffusing duct is located between two lateral walls from two adjacent pedestals. In this sense, the lateral walls of the pedestals define the lateral walls of the diffusing ducts.

In a particular embodiment, *the pedestals comprise rounded vertexes and wherein the two lateral walls have a curvature towards the inside of the pedestals so that each diffusing duct provided between two lateral walls from two consecutive pedestals is an oblong diffusing duct.*

In this embodiment, the vertices from the triangular pedestals are rounded and the two lateral walls from the pedestals that define the diffusing duct have a curvature towards the inside of the pedestals between the suction side wall and the pressure side wall. Such curvature reduces stresses on the pedestals.

According to this embodiment, the diffusing ducts are oblong diffusing ducts since the two lateral walls from two consecutive pedestals that define each diffusing duct are curved on their lateral walls.

In a preferred embodiment, the wide side of the triangular pedestals also have a curvature towards the inside of the pedestals between the suction and pressure side walls.

In a more particular embodiment, *according to a section of a triangular pedestal parallel to the flow direction F, the two lateral walls of the triangular pedestal are:*
- *concave towards said pedestal, or*
- *convex from the pedestal, or*
- *straight walls, or*
- *a combination thereof.*

The triangular shape from a pedestal can be seen by performing a section of a triangular pedestal parallel to the flow direction F. According to that section, each of the two lateral walls opposing the wide side of the pedestal can be concave towards the pedestal, convex from the pedestal or straight, between the two corresponding vertices defining that side from the triangular pedestal.

In a particular embodiment, *the diffusing ducts comprise an upper wall and* a *lower wall, the upper wall corresponding to the pressure side wall and the lower wall corresponding to the suction side wall.*

The pedestals are arranged between the suction side wall and the pressure side wall, thus, the pedestals comprises an upper wall and a lower wall that corresponds to the pressure side wall and the suction side wall respectively.

The diffusing ducts arranged between two lateral walls of consecutive pedestals comprise an upper wall and a lower wall defining the diffusing ducts, these walls corresponding to the pressure side wall and the suction side wall respectively.

In a more particular embodiment, *the upper wall and lower wall of the diffusing ducts converge in the flow direction F, and the lateral walls of the pedestals diverge in a lateral direction that is orthogonal to the flow direction F, so that the diffusing ducts merge with each other at the slot.*

The upper wall corresponds to the pressure side wall and the lower wall corresponds to the suction side wall. The pressure side wall and the suction side wall converges according to the flow direction F, reducing the space between them. Therefore, the upper and lower walls from the diffusing ducts converge in the flow direction F, i.e., the distance between these walls being the height of the diffusing ducts that decreases according to the flow direction F.

A lateral wall from the two lateral walls defining a diffusing duct located between consecutive pedestals, is a lateral wall from a particular pedestal and the other lateral wall from the two lateral walls is a lateral wall from the consecutive pedestal of the previous one.

The distance between these two lateral walls is smaller at the restrictor of a diffusing duct than at the diffuser exit area of the diffusing duct. The distance between the lateral walls increases according to the flow direction F due to the triangular shape of the pedestals, i.e., the lateral walls diverge in a lateral direction orthogonal to the flow direction F.

The diffuser exit area from a diffusing duct merges with the rest of diffuser exit areas providing a common slot for all the diffusing ducts where the pedestals end at the trailing edge.

According to a particular embodiment, the diffusing ducts comprise a flow inlet area that is smaller than a flow outlet area. The flow inlet area corresponds to the section area of the diffusing duct at the restrictor and the flow outlet area corresponds to the section area of the diffusing duct at the end of the diffuser just before the common slot.

In a more particular embodiment, *the diffusing ducts comprise a downstream to upstream area ratio of 2 to 4.*

The pressure side wall and the suction side wall converge decreasing the height of the central cavity according to the flow direction F. The diffusing ducts at the trailing edge are located between consecutive pedestals arranged between the suction and pressure side walls whereby the downstream to upstream area ratio of the diffusing ducts is mainly achieved by the duct stretching and merging with the other diffusing ducts on either side. As flow detachment may be incurred if the diffusion area ratio is excessive, the decrease in height in the flow direction F allows for a larger lateral spreading, achieving the merging of ducts in a shorter length and preventing or minimising flow detachment.

For low flow cooling applications a relatively small throat area is required in the exit of the cooling flow to the outside of the airfoil to ensure adequate backflow margin, i.e. a minimum pressure ratio to prevent hot flow ingestion in the upstream flow direction F induced by radial pressure variations. The restrictors formed between the wide sides of the triangular pedestals are the throat area (with a minimum fluid passage area between pedestals) of the cooling flow entering into the diffusing ducts which can be kept to the sufficiently small values required by this sort of applications.

In a particular embodiment, *the airfoil further comprises two lateral ends along the flow direction F, wherein at least one of the lateral ends of the row of pedestals provides an end diffusing duct between the end pedestal in the row of pedestals and one of the lateral ends of the airfoil.*

The airfoil comprises two lateral ends closing the central cavity of the airfoil between the pressure side wall and the suction side wall at the extremes of these side walls of the airfoil according to the flow direction F.

Between the last pedestal of the row of triangular pedestals and the lateral end of the airfoil at the trailing edge, a diffusing duct is provided with a restrictor that allows the penetration of the cooling flow flowing within the central cavity of the airfoil into the diffusing duct and a slot that allows the exit of the cooling flow flowing through diffusing ducts.

This end diffusing duct is delimitated by an upper and a lower wall and laterally by the lateral end of the airfoil in one side and the last pedestal in the other one.

In a particular embodiment, *the pedestals are shaped like an equilateral or isosceles or scalene triangle, and wherein for the isosceles triangle their two equal sides provide the diffusing ducts.*

The shape of the triangular pedestals can be like an equilateral triangle where all the sides of the triangular pedestal are equal, like a isosceles triangle where two sides are equal, or a scalene triangle where no sides are equal. In the case of having an isosceles shape, between two equal sides from two consecutive pedestals a diffusing duct is determined and between the different side from two consecutive pedestals a restrictor is provided.

The diffuser exit area from each diffusing duct is provided between the opposite vertex of the different side of the triangle from consecutive pedestals.

In a particular embodiment, *at least one of the pedestals in the row of pedestals are shaped different to the rest of pedestals in the row, or are orientated different to the rest of pedestals, or a combination of them.*

When the triangular pedestals present different orientations or shapes, the cooling flow may exit the diffusing ducts in a different flow direction than one of the external hot flow, the flow direction F. Being able to modify the direction of the exiting cooling flow is particularly important when it is required more or less cooling flow in a determined area at the trailing edge of the airfoil.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
Figure 1 This figure shows a schematic representation of an airfoil for a turbine engine according to the prior art.
Figure 2 This figure shows a schematic partial representation of an airfoil according to an embodiment of the present invention.
Figure 3 This figure shows a schematic partial representation of an airfoil according to another embodiment of the present invention.
Figure 4 This figure shows a schematic partial representation of an airfoil according to another embodiment of the present invention.
Figures 5A-5C These figures show a cross-sectional view of triangular pedestals of an airfoil with different shapes according to the present invention.
Figure 6 This figure shows a cross-sectional view of a triangular pedestal of an airfoil with a different orientation according to the present invention.
Figure 7 This figure shows a cross-sectional view of a schematic partial representation of an airfoil according to an embodiment of the present invention.
Figure 8 This figure shows a perspective view of two triangular pedestal of an airfoil according to an embodiment of the present invention.
Figure 9 This figure shows a cross-sectional view of figure 8.

### DETAILED DESCRIPTION OF THE INVENTION

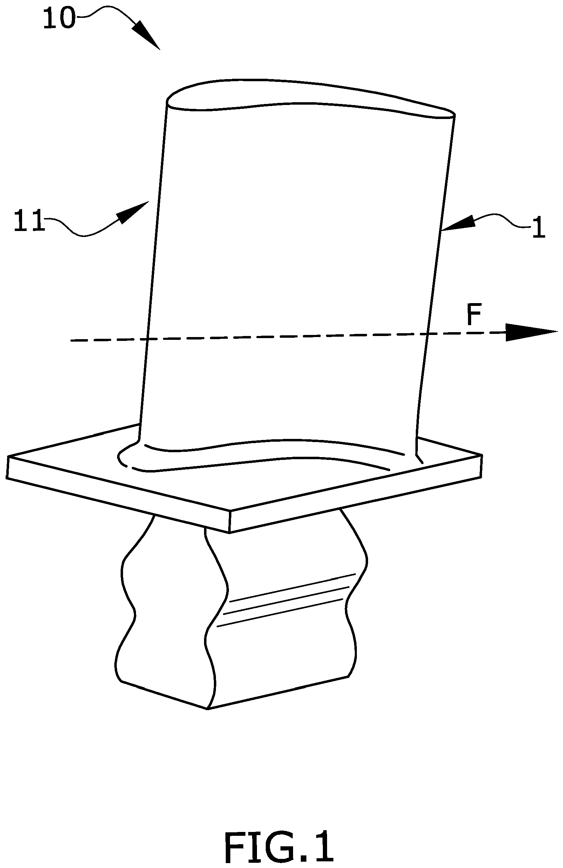

Figure 1 shows a schematic representation of an airfoil (10) for a turbine engine. The airfoil (10) comprises a leading edge (11) and a trailing edge (1) shown in figure 1. The trailing edge (1) is located axially downstream from the leading edge (11) according to a flow direction F. The flow direction F corresponds to the direction of the hot flow flowing externally to the airfoil (10) when the airfoil (10) is in operating mode.

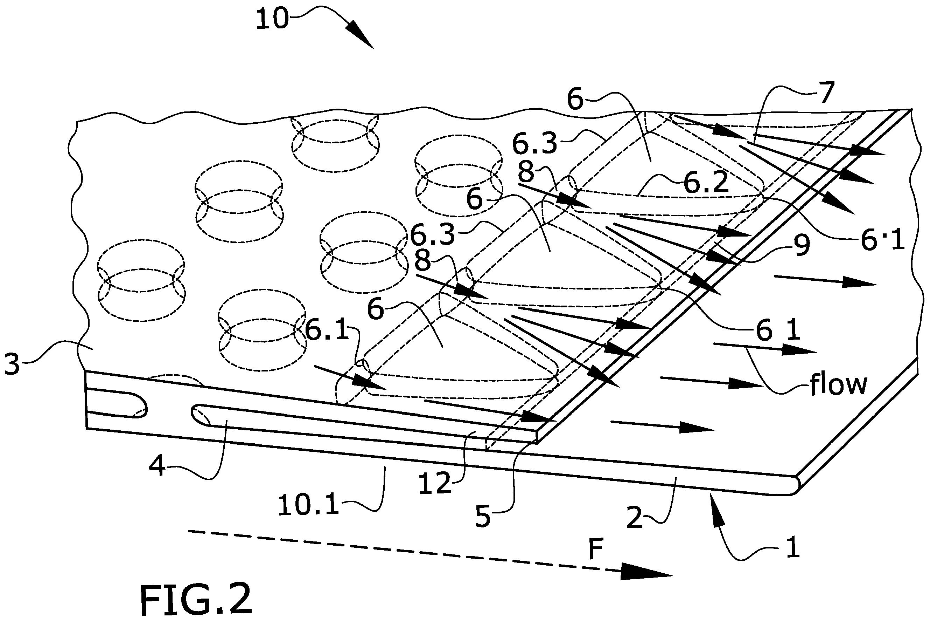

Figures 2, 3 and 4 show a partial representation of an airfoil according to the present invention.

Each airfoil (10) represented in these figures comprises a back part called trailing edge (1) that is partially shown in the figures. In each figure, the trailing edge (1) is located axially downstream from the leading edge (11) according to a flow direction F that can be seen in these figures. This flow direction F corresponds to the direction of the external hot flow surrounding the airfoil (10) in operating mode.

The airfoils (10) from these figures comprise a suction side wall (2) and a pressure side wall (3) both extending between the leading edge (11) and the trailing edge (1) meeting at both edges. A central interior cavity (4) for each airfoil (10) is defined between the suction side wall (2) and the pressure side wall (3). This cavity (4) is an open cavity in order to allow the passage of cooling flow inside the airfoil (10) and the ejection of the cooling flow over the trailing edge (1).

Each airfoil (10) comprises a row of triangular pedestals (6) located at the trailing edge (1) of the airfoil (10). The triangular pedestals (6) are arranged at least partially between the suction side wall (2) and the pressure side wall (3). Between each two consecutive pedestals (6) a diffusing duct (7) is provided as it can be seen in these figures. This diffusing ducts (7) allow the passage of the cooling flow from the central cavity (4) of the airfoil (10) to the outside of the airfoil (10) at the trailing edge (1).

As it can be seen in the figures 2-4, the central cavity (4) comprises a height that decrease in the flow direction F. The suction side wall (2) and the pressure side wall (3), determining the central cavity (4), converge in the flow direction F reducing the space between both side walls.

According to the embodiments shown in figures 2, 3 and 4, each triangular pedestal (6) comprises three sides, one wide side (6.3) located upstream of the opposite vertex according to the flow direction F, and two lateral walls (6.2) corresponding to the sides of the pedestal (6) joining in the vertex opposing the wide side (6.3).

Since the pedestals (6) are arranged between the suction side wall (2) and the pressure side wall (3) that converge according to the flow direction F, their height which is the distance between these walls (2,3), also decrease according to the flow direction F.

According to these embodiments, each diffusing duct (7) is located between two lateral walls (6.2) each lateral wall (6.2) from two adjacent pedestals (6).

Each diffusing duct (7) comprises a restrictor (8) that is the inlet through which the cooling flow flowing inside the cavity (4) enters the diffusing duct (7), and a slot (9) that is the outlet of the diffusing duct (7) through which the cooling flow flowing inside the diffusing duct (7) exits to the trailing edge (1) of the airfoil (10).

As it can be seen in the figures, each slot (9) from a diffusing duct (7) merges with the rest of slots (9) from the others diffusing ducts (7) providing a common slot for all the diffusing ducts being a diffuser exit area where the cooling flow exits the diffusing ducts (7) to the outside of the airfoil (10) over the trailing edge (1).

The cooling flow exiting a diffusing duct (7) diffuses laterally until the cooling flow ends up merging with the cooling flow exiting the other diffusing ducts (7) thus providing coalescence between the cooling flow and a uniform cooling flow over the trailing edge (1) of the airfoil (10).

Each airfoil (10) from the figures 2, 3 and 4 comprises a cut-back (5) located along the end of the pressure side wall (3) at the trailing edge (1). At the cut-back (5) the suction side wall (2) extends further downstream of the pressure side wall (3) according to the flow direction F. An airfoil exit area is defined at the cut-back (5) determined by the distance between the pressure side wall (3) and the suction side wall (2).

Each pedestal (6) according to these embodiments, comprises rounded vertexes (6.1) and the lateral walls (6.2) from the pedestals (6) defining the diffusing ducts (7) have a curvature towards the inside of the pedestals (6) between the suction side wall (2) and the pressure side wall (3).

In this way, the diffusing ducts (7) are oblong diffusing ducts (7) since the lateral walls (6.2) defining the diffusing ducts (7) are curved.

The diffusing ducts (7) from these embodiments, comprise an upper wall that corresponds to the pressure side wall (3) and a lower wall that corresponds to the suction side wall (2). The upper and lower walls converge in the flow direction F and the lateral walls (6.2) diverge in an orthogonal direction to the flow direction F.

As it can be seen in figures 2, 3 and 4, the distance between the lateral walls (6.2) from adjacent pedestals (6) defining a diffusing duct (7) is smaller at the restrictor (8) of a diffusing duct (7) than at the diffuser area or slot (9) of the diffusing duct (7).

In these figures, it can be seen a section of one of the two lateral ends (10.1) comprised in an airfoil (10). The lateral ends (10.1) are located at both extremes of the suction side wall (2) and the pressure side wall (3) according to the flow direction F. Between the lateral end (10.1) and the last pedestal (6) of the row of pedestals (6) shown in these figures, an end diffusing duct (12) is provided. The end diffusing duct (12) is laterally delimitated by the lateral end (10.1) of the airfoil (10) in one side and the lateral wall (6.2) from the last pedestal (6) of the raw in the other one.

According to the embodiment of figure 2, the row of triangular pedestals (6) of this airfoil (10) are fully located within the central cavity (4) at the trailing edge (1). The triangular pedestals (6) are completely covered by both, the suction side wall (2) and the pressure side wall (3) and the pedestals (6) are located previous to the cut-back (5) of the airfoil (10) according to the flow direction F.

In this embodiment, the diffuser exit area is the slot (9) determined by the distance between the suction side wall (2) and the pressure side wall (3) where the cooling flow exits the diffusing ducts (7). The diffuser exit area of the common slot for the diffusing ducts (7), through which the cooling flow exits the diffusing ducts (7), is located upstream from the airfoil exit area of the cut-back (5) according to the flow direction F. Due to the fact the pressure side wall (3) and the suction side wall (2) converges according to the flow direction F, reducing the space between them, the diffuser exit area is greater than the exit area of the cut-back (5) in this embodiment.

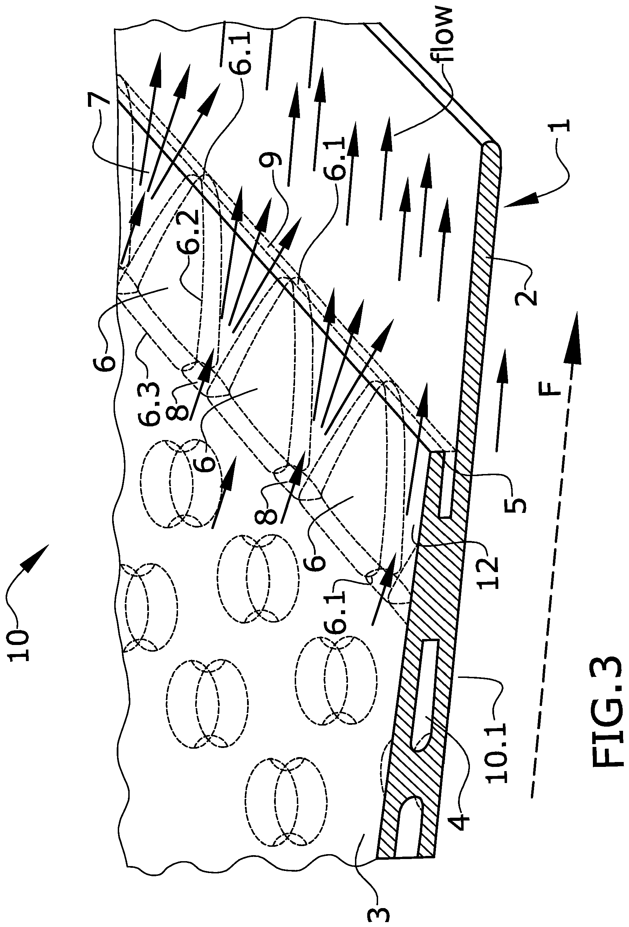

According to the embodiment of figure 3, the row of triangular pedestals (6) of this airfoil (10) are arranged within the central cavity (4) at the trailing edge (1). The triangular pedestals (6) are completely cover by both, the suction side wall (2) and the pressure side wall (3). But, as it can be seen in figure 3, the pedestals (6) end at the cut-back (5) of the airfoil (10) and the diffuser exit area which constitutes the end of the pedestals (6) corresponds to the airfoil exit area at the cut-back (5).

In this embodiment, the diffuser exit area is the slot determined by the distance between the suction side wall (2) and the pressure side wall (3) at the end of the pressure side wall (3) that is where the cut-back (5) is arranged. Therefore, the diffuser exit area is equal to the airfoil exit area of the cut-back (5) in this embodiment.

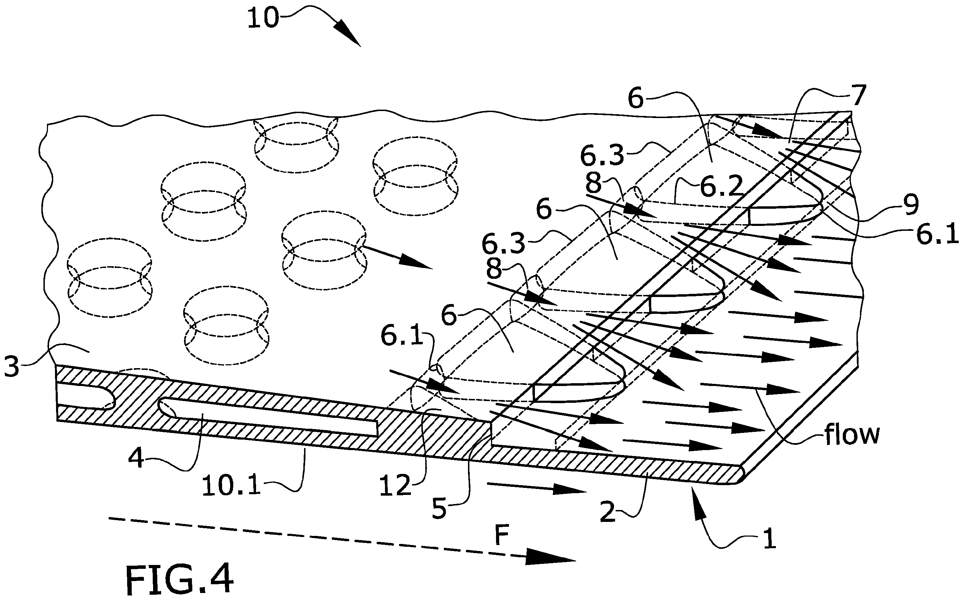

According to the embodiment of figure 4, the row of triangular pedestals (6) of this airfoil (10) are partially uncovered by the pressure side wall (3).

As it can be seen on this figure 4, the cut-back (5) of the pressure side wall (3) is arranged before than the common slot for the diffusing ducts (7), between the restrictors (8) and the slots (9) of the diffusing ducts (7).

In this embodiment, the cooling flow enters into the diffusing ducts (7) through the restrictors (8) and once the cooling flow passes through the cut-back (5) at the end of the pressure side wall (3), the cooling flow flowing within the diffusing ducts (7) interacts, before exiting the diffusing ducts (7) at the common slot (9), with the external hot flow since the last part of the diffusing ducts (7) are uncovered by the pressure side wall (3).

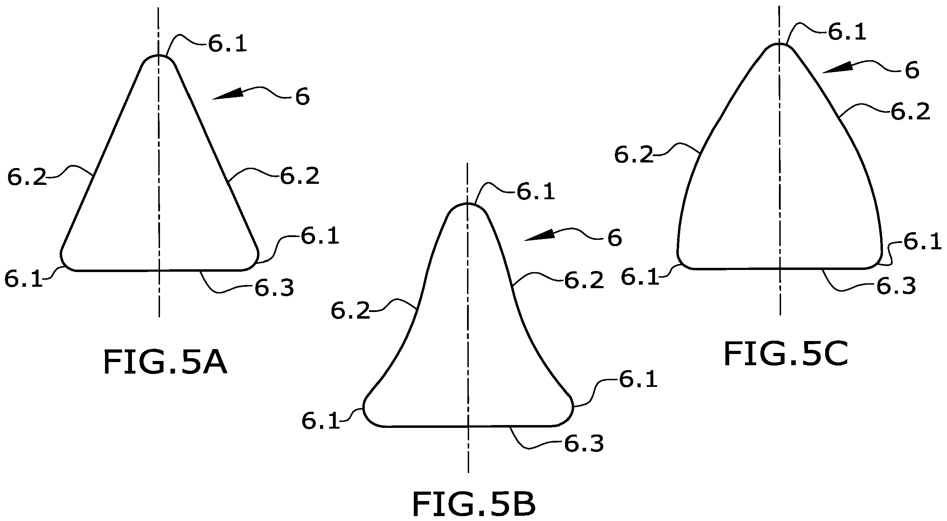

Figures 5A, 5B and 5C show a cross-sectional view of triangular pedestals of an airfoil with different shapes according to the present invention.

In these figures, the triangular shape from particular pedestals (6) are shown after performing a section of the triangular pedestals (6) parallel to the flow direction F.

The triangular pedestals (6) from these figures are shaped like an isosceles triangle wherein their two equal sides are the lateral walls (6.2) from the pedestals (6) and provide the diffusing ducts (7).

Figure 5A shows the section of a triangular pedestal (6) wherein the two lateral walls (6.2) opposing the wide side (6.3) of the pedestal (6) are straight between the vertices defining each wall (6.2).

Figure 5B shows the section of a triangular pedestal (6) wherein the two lateral walls (6.2) opposing the wide side (6.3) of the pedestal (6) are concave towards said pedestal (6) between the vertices defining each wall (6.2).

Figure 5C shows the section of a triangular pedestal (6) wherein the two lateral walls (6.2) opposing the wide side (6.3) of the pedestal (6) are convex from the pedestal (6) between the vertices defining each wall (6.2).

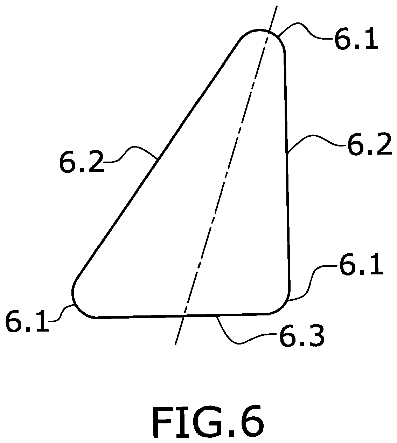

Figure 6 shows a cross-sectional view of a triangular pedestal (6) of an airfoil (10) with a different orientation according to the present invention.

In this figure, the triangular shape from a particular pedestal (6) is shown after performing a section of the triangular pedestal (6) parallel to the flow direction F.

This triangular pedestal (6) has a different orientation in comparison with the triangular pedestals (6) from the previous examples shown in figures 5A-5C and therefore this triangular pedestal (6) is shaped like a scalene triangle wherein no sides are equal.

Using a triangular pedestal (6) with different orientation (for example with respect to the flow direction F that follow in the previous figures 5A-5B) allows modifying the direction of the exiting cooling flow in a determined area of the trailing edge (1) where more or less cooling flow is required.

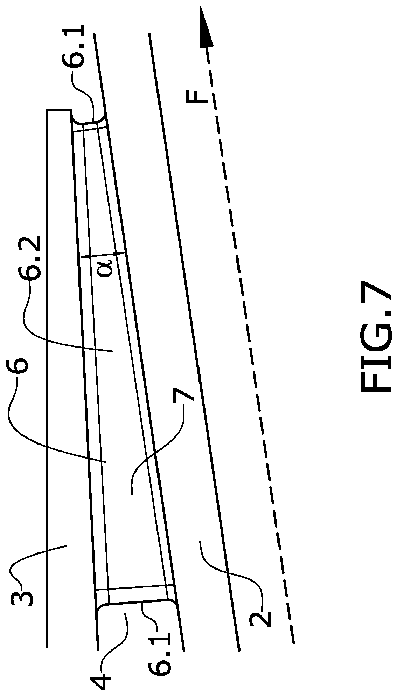

Figure 7 shows a schematic view of a suction side wall (2) and a pressure side wall (3) of an airfoil both extending axially along a flow direction F. There is a triangular pedestal (6) arranged between the suction side wall (2) and the pressure side wall (3) at the trailing edge of the airfoil. Specifically, the suction side wall (2) is spaced from the pressure side wall (3) providing a central cavity (4) between them to allow the passage of cooling flow inside the airfoil. Figure 7 further shows a diffusing duct (7) and a lateral wall (6.2) of the pedestals (6) with a curvature towards the inside of the pedestal (6). The central cavity (4) comprises a height decreasing in the flow direction F, and therefore, the height of the diffusing duct also decreases in the flow direction F as it can be observed in figure 7.

Figure 7 further shows the geometric contraction angle α that is formed between the suction side wall (2) and the pressure side wall (3). In a particular example according to the invention, the geometric contraction angle α is comprised between 5 and 15 °C.

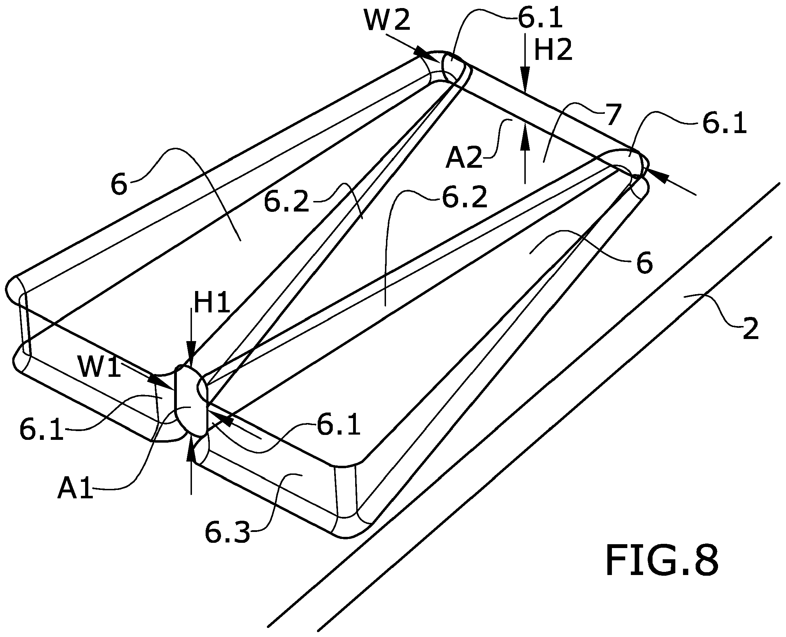

Figure 8 shows a perspective upper view of a portion of an airfoil according to the invention (without showing the pressure side wall (3)). In particular, this figure shows an upper perspective view of two triangular pedestals (6) arranged on the suction side wall (2) of an airfoil. There is a diffusing duct (7) between both pedestals (6) with a flow inlet area A1 defined by an inlet width W1 and an inlet height H1; and a flow outlet area A2 defined by and outlet width W2 greater than the flow inlet width W1 and an outlet height H2 lower than the flow inlet height H1. The flow inlet area A1 corresponds to the minimum fluid passage area through the diffusing duct (7) that is the restrictor (8) according to the invention. The inlet width W1 of the restrictor (8) corresponds to the minimum distance between two pedestals (6) and the inlet height H1 corresponds to the height of the pedestals (6) at the restrictor (8). On the other hand, the flow outlet area A2 corresponds to the section area of the diffusing duct (7) at the end of the diffuser just before the common slot. The outlet width W2 corresponds to the maximum distance between two pedestals (6) just before de common slot. In a particular example of the invention, the geometric outlet area to inlet area ratio A2/A1 is comprised between 2 and 4. Each pedestal (6) comprises rounded vertexes (6.1), two lateral walls (6.2) and a wide side (6.3). Specifically, the two lateral walls (6.2) have a curvature towards the inside of the pedestal (6) so that each diffusing duct (7) provided between two lateral walls (6.2) from two consecutive pedestals (6) is an oblong diffusing duct (7). More particularly, as it can be observed in this figure 8, both inlet area A1 and outlet area A2 are an oblong area.

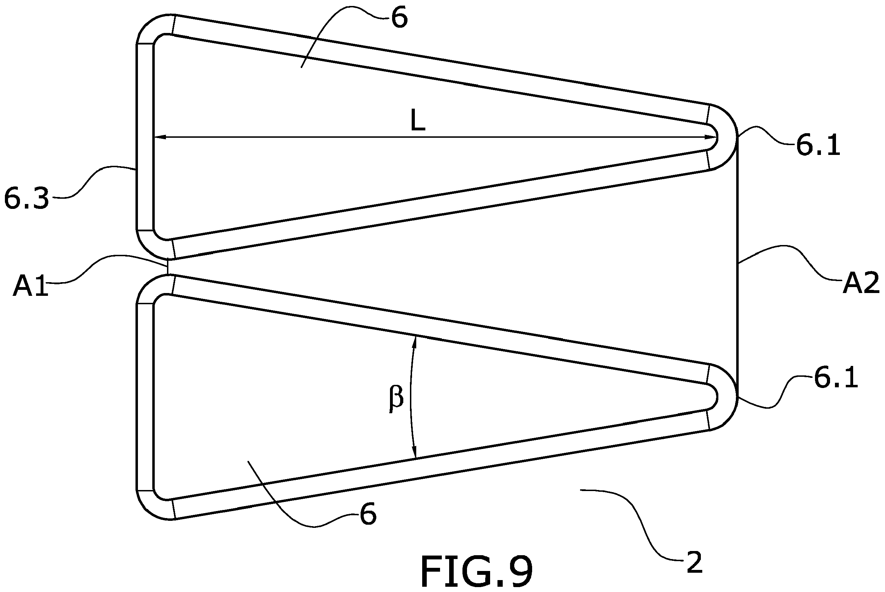

Figure 9 shows a cross-sectional view of figure 8 where it can be observed the length L from one vertex (6.1) of the triangular pedestal (6) to the wide side (6.3) of the same pedestal (6). Moreover, this figure shows the geometric expansion angle β that forms the two lateral walls (6.2) of the pedestal (6) between them. In a particular example according to the invention, the geometric expansion angle β is comprised between 10 and 30 °C. The length to inlet width ratio L/W1 is comprised between 2 and 20; and the outlet width to outlet height ratio W2/H2 is comprised between 2 and 10.

## Claims

1. A turbine airfoil (10) comprising:
- a leading edge (11) and a trailing edge (1), the trailing edge (1) being located axially downstream from the leading edge (11) according to a flow direction F that corresponds to the direction of external hot flow when flowing outside the airfoil (10) in operating mode;
- a suction side wall (2) and a pressure side wall (3) both extending axially between the leading edge (11) and the trailing edge (1), the suction side wall (2) being spaced from the pressure side wall (3) and defining between them a central cavity (4) of the airfoil (10), the central cavity (4) being configured to allow the passage of cooling flow inside the airfoil (10); the airfoil (10) being **characterised by** further comprising
- a row of a plurality of triangular pedestals (6) being arranged at least partially between the suction side wall (2) and the pressure side wall (3) at the trailing edge (1); and
- at least one diffusing duct (7) provided between each two consecutive pedestals (6),
wherein
the central cavity (4) comprises a height decreasing in the flow direction F; the triangular pedestals (6) comprise a wide side (6.3) faced to the leading edge (11) and two lateral walls (6.2) joining in a vertex (6.1) that is opposite to the wide side (6.3) and faced to the trailing edge (1) so that at least one diffusing duct (7) is provided between two lateral walls (6.2) from two consecutive triangular pedestals (6), and each diffusing duct (7) comprises
• a restrictor (8) configured for allowing the penetration of the cooling flow flowing within the central cavity (4) into the diffusing duct (7), and
• a slot (9) configured for allowing the exit of the cooling flow flowing through diffusing ducts (7) over the trailing edge (1), this slot (9) being common for all the diffusing ducts (7) since each slot (9) from a diffusing duct (7) merges with the rest of slots from the other diffusing ducts (7), and this common slot (9) being a diffuser exit area of cooling flow, the slot (9) from each diffusing duct (7) being provided between the vertexes (6.1) opposite to the wide sides (6.3) of the triangular pedestals (6) from consecutive triangular pedestals (6).

2. The airfoil (10) according to claim 1, wherein the airfoil (10) further comprises a cut-back (5) on the pressure side wall (3) at the trailing edge (1), wherein the cut-back (5) defines an airfoil exit area determined by the distance between the suction side wall (2) and the pressure side wall (3) at the end of the pressure side wall (3).

3. The airfoil (10) according to claim 2, wherein the pedestals (6) are located within the cavity (4) and completely covered by both, suction side wall (2) and pressure side wall (3), and also arranged upstream from the cut-back (5) according to the flow direction F at the trailing edge (1), and wherein the diffuser exit area is determined by the distance between the suction side wall (2) and the pressure side wall (3) at the slot (9) and this diffuser exit area of the slot (9) is greater than the airfoil exit area of the cut-back (5).

4. The airfoil (10) according to claim 2, wherein the pedestals (6) are located within the cavity (4) and completely covered by both, suction side wall (2) and pressure side wall (3), and arranged in such way that the diffuser exit area of the slot (9) is determined by the distance between the suction side wall (2) and the pressure side wall (3) at the slot (9) and corresponds to the airfoil exit area of the cut-back (5).

5. The airfoil (10) according to claim 2, wherein the pedestals (6) are partially uncovered by the pressure side wall (3) and the cut-back (5) is arranged between the restrictors (8) of the diffusing ducts (7) and the slot (9), wherein the airfoil exit area of the cut-back (5) is provided between the restrictors (8) and the diffuser exit area of the slot (9).

6. The airfoil (10) according to any one of previous claims, wherein the pedestals (6) comprise a height decreasing in the flow direction F.

7. The airfoil (10) according to any one of the previous claims , wherein the pedestals (6) comprise rounded vertexes (6.1) and wherein the two lateral walls (6.2) have a curvature towards the inside of the pedestals (6) so that each diffusing duct (7) provided between two lateral walls (6.2) from two consecutive pedestals (6) is an oblong diffusing duct (7).

8. The airfoil (10) according to any one of previous claims, wherein according to a section of a triangular pedestal (6) parallel to the flow direction F, the two lateral walls (6.2) of the triangular pedestal (6) are:
- concave towards said pedestal (6), or
- convex from the pedestal (6), or
- straight walls, or
- a combination thereof.

9. The airfoil (10) according to any of the previous claims, wherein the diffusing ducts (7) comprise an upper wall and a lower wall, the upper wall corresponding to the pressure side wall (3) and the lower wall corresponding to the suction side wall (2).

10. The airfoil (10) according to claim 9, wherein the upper wall and lower wall of the diffusing ducts (7) converge in the flow direction F, and the lateral walls (6.2) of the pedestals (6) diverge in a lateral direction that is orthogonal to the flow direction F, so that the diffusing ducts (7) merge with each other at the slot (9).

11. The airfoil (10) according to claim 10, wherein the diffusing ducts (7) comprise a downstream to upstream area ratio of 2 to 4.

12. The airfoil (10) according to any of the previous claims, further comprises two lateral ends (10.1) along the flow direction F, wherein at least one of the lateral ends of the row of pedestals (6) provides an end diffusing duct (12) between the end pedestal (6) in the row of pedestals (6) and one of the lateral ends (10.1) of the airfoil (10).

13. The airfoil (10) according to any of the previous claims, wherein the pedestals (6) are shaped like an equilateral or isosceles or scalene triangle, and wherein for the isosceles triangle their two equal sides provide the diffusing ducts (7).

14. The airfoil (10) according to any of the previous claims, wherein at least one of the pedestals (6) in the row of pedestals (6) are shaped different to the rest of pedestals (6) in the row, or are orientated different to the rest of pedestals (6), or a combination of them.

## Patentansprüche

1. Turbinenschaufelblatt (10), umfassend:
- eine Vorderkante (11) und eine Hinterkante (1), wobei die Hinterkante (1) axial stromabwärts von der Vorderkante (11) gemäß einer Strömungsrichtung F angeordnet ist, die der Richtung einer externen heißen Strömung entspricht, wenn sie im Betriebsmodus außerhalb des Schaufelblatts (10) strömt;
- eine saugseitige Wand (2) und eine druckseitige Wand (3), die sich beide axial zwischen der Vorderkante (11) und der Hinterkante (1) erstrecken, wobei die saugseitige Wand (2) von der druckseitigen Wand (3) beabstandet ist und zwischen ihnen einen zentralen Hohlraum (4) des Schaufelblatts (10) definiert, wobei der zentrale Hohlraum (4) so konfiguriert ist, dass er den Durchgang einer Kühlströmung innerhalb des Schaufelblatts (10) ermöglicht; wobei das Schaufelblatt (10) **dadurch gekennzeichnet ist, dass** es ferner Folgendes umfasst
- eine Reihe von mehreren dreieckigen Sockeln (6), die zumindest teilweise zwischen der saugseitigen Wand (2) und der druckseitigen Wand (3) an der Hinterkante (1) angeordnet sind; und
- mindestens ein Diffusionskanal (7), der zwischen jeweils zwei aufeinanderfolgenden Sockeln (6) vorgesehen ist,
wobei
der zentrale Hohlraum (4) eine in Strömungsrichtung F abnehmende Höhe aufweist;
die dreieckigen Sockel (6) eine breite Seite (6.3), die der Vorderkante (11) zugewandt ist, und zwei Seitenwände (6.2) umfassen, die sich in einem Scheitelpunkt (6.1) treffen, der der breiten Seite (6.3) gegenüberliegt und der Hinterkante (1) zugewandt ist, so dass mindestens ein Diffusionskanal (7) zwischen zwei Seitenwänden (6.2) von zwei aufeinanderfolgenden dreieckigen Sockeln (6) vorgesehen ist, und jeder Diffusionskanal (7) umfasst
• eine Drossel (8), die so konfiguriert ist, dass sie das Eindringen des im zentralen Hohlraum (4) fließenden Kühlstroms in den Diffusionskanal (7) ermöglicht, und
• einen Schlitz (9), der so konfiguriert ist, dass er den Austritt des durch die Diffusionskanäle (7) strömenden Kühlstroms über die Hinterkante (1) ermöglicht, wobei dieser Schlitz (9) für alle Diffusionskanäle (7) gemeinsam ist, da jeder Schlitz (9) eines Diffusionskanals (7) in den Rest der Schlitze der anderen Diffusionskanäle (7) übergeht, und dieser gemeinsame Schlitz (9) ein Diffusionsaustrittsbereich des Kühlstroms ist, wobei der Schlitz (9) jedes Diffusionskanals (7) zwischen den Scheitelpunkten (6.1) gegenüber den breiten Seiten (6.3) der dreieckigen Sockel (6) von aufeinanderfolgenden dreieckigen Sockeln (6) vorgesehen ist.

2. Schaufelblatt (10) nach Anspruch 1, wobei das Schaufelblatt (10) ferner ein Rückschnitt (5) an der druckseitigen Wand (3) an der Hinterkante (1) aufweist, wobei der Rückschnitt (5) eine Schaufelblattaustrittsfläche definiert, die durch den Abstand zwischen der saugseitigen Wand (2) und der druckseitigen Wand (3) am Ende der druckseitigen Wand (3) bestimmt wird.

3. Schaufelblatt (10) nach Anspruch 2, wobei die Sockel (6) innerhalb des Hohlraums (4) liegen und sowohl von der saugseitigen Wand (2) als auch von der druckseitigen Wand (3) vollständig überdeckt sind und auch gemäß Strömungsrichtung F an der Hinterkante (1) stromaufwärts des Rückschnitts (5) angeordnet sind, und wobei die Diffusionsaustrittsfläche durch den Abstand zwischen der saugseitigen Wand (2) und der druckseitigen Wand (3) am Schlitz (9) bestimmt ist und diese Diffusionsaustrittsfläche des Schlitzes (9) größer ist als die Schaufelaustrittsfläche des Rückschnitts (5).

4. Schaufelblatt (10) nach Anspruch 2, wobei die Sockel (6) innerhalb des Hohlraums (4) angeordnet und sowohl von der saugseitigen Wand (2) als auch von der druckseitigen Wand (3) vollständig bedeckt sind und so angeordnet sind, dass die Diffusionsaustrittsfläche des Schlitzes (9) durch den Abstand zwischen der saugseitigen Wand (2) und der druckseitigen Wand (3) am Schlitz (9) bestimmt ist und der Schaufelblattaustrittsfläche des Rückschnitts (5) entspricht.

5. Schaufelblatt (10) nach Anspruch 2, wobei die Sockel (6) von der druckseitigen Wand (3) teilweise freigelegt sind und der Rückschnitt (5) zwischen den Drosseln (8) der Diffusionskanäle (7) und dem Schlitz (9) angeordnet ist, wobei der Schaufelaustrittsbereich des Rückschnitts (5) zwischen den Drosseln (8) und dem Diffusionsaustrittsbereich des Schlitzes (9) vorgesehen ist.

6. Schaufelblatt (10) nach einem der vorhergehenden Ansprüche, wobei die Sockel (6) eine in Strömungsrichtung F abnehmende Höhe umfassen.

7. Schaufelblatt (10) nach einem der vorhergehenden Ansprüche, bei dem die Sockel (6) abgerundete Scheitelpunkte (6.1) aufweisen und bei dem die beiden Seitenwände (6.2) eine Krümmung zur Innenseite der Sockel (6) hin aufweisen, so dass jeder zwischen zwei Seitenwänden (6.2) von zwei aufeinanderfolgenden Sockeln (6) vorgesehene Diffusionskanal (7) ein länglicher Diffusionskanal (7) ist.

8. Schaufelblatt (10) nach einem der vorhergehenden Ansprüche, wobei die beiden Seitenwände (6.2) des dreieckigen Sockels (6) in einem zur Strömungsrichtung F parallelen Schnitt des dreieckigen Sockels (6) sind:
- konkav zum besagten Sockel (6) hin, oder
- konvex vom Sockel (6) aus, oder
- gerade Wände, oder
- eine Kombination davon.

9. Schaufelblatt (10) nach einem der vorhergehenden Ansprüche, wobei die Diffusionskanäle (7) eine obere und eine untere Wand aufweisen, wobei die obere Wand der druckseitigen Wand (3) und die untere Wand der saugseitigen Wand (2) entspricht.

10. Schaufelblatt (10) nach Anspruch 9, wobei die obere Wand und die untere Wand der Diffusionskanäle (7) in der Strömungsrichtung F konvergieren und die Seitenwände (6.2) der Sockel (6) in einer zur Strömungsrichtung F orthogonalen Seitenrichtung divergieren, so dass die Diffusionskanäle (7) am Schlitz (9) miteinander verschmelzen.

11. Schaufelblatt (10) nach Anspruch 10, wobei die Diffusionskanäle (7) ein Verhältnis von stromabwärts zu stromaufwärts gelegenen Flächen von 2 bis 4 aufweisen.

12. Schaufelblatt (10) nach einem der vorhergehenden Ansprüche, ferner umfassend zwei Seitenenden (10.1) entlang der Strömungsrichtung F, wobei mindestens eine der Seitenenden der Reihe von Sockeln (6) einen Enddiffusionskanal (12) zwischen dem Endsockel (6) in der Reihe von Sockeln (6) und einem der Seitenenden (10.1) des Schaufelblatts (10) bildet.

13. Schaufelblatt (10) nach einem der vorhergehenden Ansprüche, wobei die Sockel (6) die Form eines gleichseitigen oder gleichschenkligen oder ungleichschenkligen Dreiecks haben, und wobei beim gleichschenkligen Dreieck ihre beiden gleichen Seiten die Streukanäle (7) bilden.

14. Schaufelblatt (10) nach einem der vorhergehenden Ansprüche, wobei mindestens einer der Sockel (6) in der Reihe von Sockeln (6) anders geformt ist als der Rest der Sockel (6) in der Reihe, oder anders ausgerichtet ist als der Rest der Sockel (6), oder eine Kombination davon.

## Revendications

1. Une ailette de turbine (10) comprenant :
- un bord d'attaque (11) et un bord de fuite (1), le bord de fuite (1) étant situé axialement en aval du bord d'attaque (11) selon une direction d'écoulement F qui correspond à la direction de l'écoulement chaud externe lorsqu'il s'écoule à l'extérieur de l'ailette (10) en mode de fonctionnement ;
- une paroi latérale d'aspiration (2) et une paroi latérale de refoulement (3) s'étendant toutes deux axialement entre le bord d'attaque (11) et le bord de fuite (1), la paroi latérale d'aspiration (2) étant espacée de la paroi latérale de refoulement (3) et définissant entre elles une cavité centrale (4) de l'ailette (10), la cavité centrale (4) étant configurée pour permettre le passage d'un flux de refroidissement à l'intérieur de l'ailette (10) ; l'ailette (10) est **caractérisée par le fait qu'**elle comprend en outre
- une rangée d'une pluralité de piédestaux triangulaires (6) disposés au moins partiellement entre la paroi latérale d'aspiration (2) et la paroi latérale de refoulement (3) au niveau du bord de fuite (1) ; et
- au moins un conduit de diffusion (7) prévu entre deux piédestaux consécutifs (6),
dans laquelle
la cavité centrale (4) a une hauteur qui diminue dans la direction d'écoulement F ; les piédestaux triangulaires (6) comprennent un côté large (6.3) orienté vers le bord d'attaque (11) et deux parois latérales (6.2) se rejoignant en un sommet (6.1) opposé au côté large (6.3) et orienté vers le bord de fuite (1) de sorte qu'au moins un conduit de diffusion (7) est prévu entre deux parois latérales (6.2) de deux piédestaux triangulaires (6) consécutifs, et chaque conduit de diffusion (7) comprend
∘ un restricteur (8) configuré pour permettre la pénétration du flux de refroidissement circulant dans la cavité centrale (4) dans le conduit de diffusion (7), et
∘ une fente (9) configurée pour permettre la sortie du flux de refroidissement circulant dans les conduits de diffusion (7) sur le bord de fuite (1), cette fente (9) étant commune à tous les conduits de diffusion (7) puisque chaque fente (9) d'un conduit de diffusion (7) est commune à tous les conduits de diffusion (7). Cette fente (9) est commune à tous les conduits de diffusion (7) puisque chaque fente (9) d'un conduit de diffusion (7) fusionne avec le reste des fentes des autres conduits de diffusion (7), et cette fente commune (9) est une zone de sortie du flux de refroidissement, la fente (9) de chaque conduit de diffusion (7) étant prévue entre les sommets (6.1) opposés aux côtés larges (6.3) des piédestaux triangulaires (6) de piédestaux triangulaires consécutifs (6).

2. L'ailette (10) selon la revendication 1, dans laquelle l'ailette (10) comprend en outre une découpe (5) sur la paroi latérale de refoulement (3) au niveau du bord de fuite (1), dans laquelle la découpe (5) définit une zone de sortie de l'ailette déterminée par la distance entre la paroi latérale d'aspiration (2) et la paroi latérale de refoulement (3) à l'extrémité de la paroi latérale de refoulement (3).

3. L'ailette (10) selon la revendication 2, dans lequel les piédestaux (6) sont situés à l'intérieur de la cavité (4) et entièrement recouverts à la fois par la paroi latérale d'aspiration (2) et la paroi latérale de refoulement (3), et également disposés en amont de la découpe (5) selon la direction d'écoulement F au niveau du bord de fuite (1), et dans lequel l'aire de la zone de sortie du diffuseur est déterminée par la distance entre la paroi latérale d'aspiration (2) et la paroi latérale de refoulement (3) au niveau de la fente (9) et que l'aire de cette zone de sortie du diffuseur de la fente (9) est plus grande que l'aire de la découpe (5) de la zone de sortie de l'ailette.

4. L'ailette (10) selon la revendication 2, dans laquelle les piédestaux (6) sont situés à l'intérieur de la cavité (4) et entièrement recouverts à la fois par la paroi latérale d'aspiration (2) et la paroi latérale de refoulement (3), et disposés de telle sorte que l'aire de la zone de sortie du diffuseur de la fente (9) est déterminée par la distance entre la paroi latérale d'aspiration (2) et la paroi latérale de refoulement (3) au niveau de la fente (9) et correspond à l'aire de la découpe (5) de la zone de sortie de l'ailette.

5. L'ailette (10) selon la revendication 2, dans lequel les piédestaux (6) sont partiellement découverts par la paroi latérale de refoulement (3) et le découpe (5) est disposée entre les restricteurs (8) des conduits de diffusion (7) et la fente (9), dans laquelle l'aire de la découpe (5) de la zone de sortie de l'ailette est prévue entre les restricteurs (8) et l'aire de la zone de sortie du diffuseur de la fente (9).

6. L'ailette (10) selon l'une quelconque des revendications précédentes, dans laquelle les piédestaux (6) ont une hauteur décroissante dans la direction d'écoulement F.

7. L'ailette (10) selon l'une quelconque des revendications précédentes, dans laquelle les piédestaux (6) comportent des sommets arrondis (6.1) et dans laquelle les deux parois latérales (6.2) présentent une courbure vers l'intérieur des piédestaux (6) de sorte que chaque conduit de diffusion (7) disposé entre deux parois latérales (6.2) de deux piédestaux (6) consécutifs est un conduit de diffusion oblong (7).

8. L'ailette (10) selon l'une quelconque des revendications précédentes, dans laquelle selon une section d'un piédestal triangulaire (6) parallèle à la direction d'écoulement F, les deux parois latérales (6.2) du piédestal triangulaire (6) sont :
- concaves vers ledit piédestal (6), ou
- convexes par rapport au piédestal (6), ou
- des parois droites, ou
- une combinaison de ces caractéristiques.

9. L'ailette (10) selon l'une quelconque des revendications précédentes, dans laquelle les conduits de diffusion (7) comprennent une paroi supérieure et une paroi inférieure, la paroi supérieure correspondant à la paroi latérale de refoulement (3), et la paroi inférieure correspondant à la paroi latérale d'aspiration (2).

10. L'ailette (10) selon la revendication 9, dans laquelle la paroi supérieure et la paroi inférieure des conduits de diffusion (7) convergent dans la direction d'écoulement F, et les parois latérales (6.2) des piédestaux (6) divergent dans une direction latérale orthogonale à la direction d'écoulement F, de sorte que les conduits de diffusion (7) se rejoignent au niveau de la fente (9).

11. L'ailette (10) selon la revendication 10, dans laquelle les conduits de diffusion (7) comprennent un rapport de surface d'aval en amont de 2 à 4.

12. L'ailette (10) selon l'une quelconque des revendications précédentes, comprend en outre deux extrémités latérales (10.1) le long de la direction d'écoulement F, dans laquelle au moins l'une des extrémités latérales de la rangée de piédestaux (6) fournit un conduit de diffusion d'extrémité (12) entre le piédestal d'extrémité (6) de la rangée de de piédestaux (6) et l'une des extrémités latérales (10.1) de l'ailette (10).

13. L'ailette (10) selon l'une quelconque des revendications précédentes, dans laquelle les piédestaux (6) ont la forme d'un triangle équilatéral, isocèle ou scalène, et dans laquelle pour les triangles isocèles, leurs deux côtés égaux fournissent les conduits de diffusion (7).

14. L'ailette (10) selon l'une des revendications précédentes, dans laquelle au moins un des piédestaux (6) de la rangée de piédestaux (6) a une forme différente de celle des autres piédestaux (6) de la rangée, ou une orientation différente de celle des autres piédestaux (6), ou une combinaison de ces caractéristiques.
